**Europäisches Patentamt**

**European Patent Office**

**Office européen des brevets**

(19)

(11) Numéro de publication : **0 065 696**
**B1**

(12) FASCICULE DE BREVET EUROPÉEN

(45) Date de publication du fascicule du brevet :
**02.01.86**

(51) Int. Cl.⁴ : **F 16 C 17/04**

(21) Numéro de dépôt : **82104069.8**

(22) Date de dépôt : **11.05.82**

(54) **Butée à patins fixés.**

(30) Priorité : **15.05.81 FR 8109706**

(43) Date de publication de la demande :
**01.12.82 Bulletin 82/48**

(45) Mention de la délivrance du brevet :
**02.01.86 Bulletin 86/01**

(84) Etats contractants désignés :
**AT BE CH DE FR GB IT LI LU NL SE**

(56) Documents cités :
**DE-A- 3 025 876**
**FR-A- 484 366**
**FR-A- 2 160 048**
**GB-A- 843 021**
**US-A- 1 436 265**
**US-A- 2 731 308**

(73) Titulaire : **ALSTHOM-ATLANTIQUE Société anonyme
dite:**
**38, Avenue Kléber**
**F-75784 Paris Cedex 16 (FR)**

(72) Inventeur : **Foucher, Gérard**
**4, rue Olivier de Serres**
**F-93290 Tremblay Les Gonesse (FR)**
Inventeur : **Hermand, Michel**
**28, rue Victor Hugo**
**F-93150 Le Blanc Mesnil (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

La présente invention a trait à une butée à patins fixes pour turbomachine comportant un collet soldaire du rotor de la turbomachine une couronne en deux parties égales de patins fixes en forme de secteurs séparés par des rainures radiales, disposée autour du rotor et dont la face arrière repose sur des moyens de support, chaque patin étant limité par un premier bord latéral et un second bord latéral, le premier bord étant situé avant le second bord en suivant le sens de rotation du collet, la face avant de chaque patin étant située en regard du collet et présentant une face plane allant en s'écartant de la face arrière de la couronne à partir du premier bord latéral, la tranche externe du patin étant située en regard de la paroi d'une cage fixe contenant la couronne et les moyens de support, des moyens d'alimentation en huile débouchant dans la cage fixe et une chambre annulaire de récupération d'huile où elle est évacuée par gravitation au travers d'un ou plusieurs conduits situés dans la partie inférieure de la cage fixe.

De telles butées ont été installées dans les turbomachines des centrales nucléaires de Bugey et de Fessenheim en 1976.

Dans des butées à patins fixes connues, l'huile est injectée le long du rotor et sous l'effet de la pression d'huile est forcée dans des rainures qui sont borgnes, au niveau de la tranche externe des patins si bien que l'huile circule le long de la face avant des patins formant ainsi coin d'huile.

Dans les butées connues où on réalise un barbotage avec l'huile sous pression, celle-ci est cisaillée entre partie fixe (la cage de butée) et partie mobile, si bien que de la puissance est consommée en pure perte.

La butée selon l'invention permettant de diminuer cette puissance consommée en pure perte est caractérisée en ce que chaque patin est muni sur sa face avant d'une ouverture située au voisinage du premier bord latéral et ne débouchant pas sur les tranches interne et externe du patin, ladite ouverture étant alimentée par une canalisation percée dans le patin et débouchant par un orifice sur sa tranche externe, en ce que les rainures radiales s'étendent sur la totalité de la couronne, en ce que la paroi de la cage face à l'orifice sur la tranche externe de chaque patin présente un espace alimenté en huile par les moyens d'alimentation, et en ce que les moyens de support sont déformables.

Le fonctionnement avantageux de la butée selon l'invention est dû au fait qu'il n'y a pas barbotage de l'huile dans la butée car l'injection d'huile n'est pas réalisée entre parties fixes et parties mobiles où l'huile n'a aucune fonction à jouer, mais près du premier bord latéral de chaque patin où elle est active pour créer un film entre patins et collet. De plus, grâce aux rainures, une partie de l'huile chaude, donc ayant travaillé, peut être évacuée. Enfin le fait que les moyens de support soient déformables permet d'équilibrer les charges sur chaque patin.

Il est connu du document DE-A-3 025 876 une butée à patins fixes dont les patins sont séparés par des rainures radiales dans lesquelles débouchent l'extrémité des moyens d'alimentation en huile sous pression.

Il s'ensuit que l'huile froide d'alimentation se mélange avec de l'huile ayant déjà été cisaillée si bien que le patin est alimenté partiellement avec de l'huile chaude et que l'huile froide est évacuée par les rainures radiales ouvertes à leurs deux bouts sans avoir travaillé si bien que le rendement est médiocre.

Selon un perfectionnement, la butée selon l'invention comporte des moyens assurant l'étanchéité entre la tranche externe des patins et la paroi de la cage empêchant l'huile arrivant par le circuit d'alimentation de fuir vers la face arrière de la couronne ainsi que vers les rainures et les faces avant des patins, ce qui limite la consommation d'huile. Selon une réalisation particulièrement simple, les moyens d'étanchéité sont constitués par des joints filiformes entourant la couronne de part et d'autre des orifices sur la tranche externe des patins.

L'invention va maintenant être décrite plus en détail en se référant à un mode de réalisation particulier cité à titre d'exemple et représenté par les dessins annexés.

La figure 1 représente le palier de butée selon l'invention.

La figure 2 représente une vue de face d'une partie de la couronne de patins selon l'invention.

La figure 3 représente une coupe développée de la couronne de patins de la figure 2 suivant III-III.

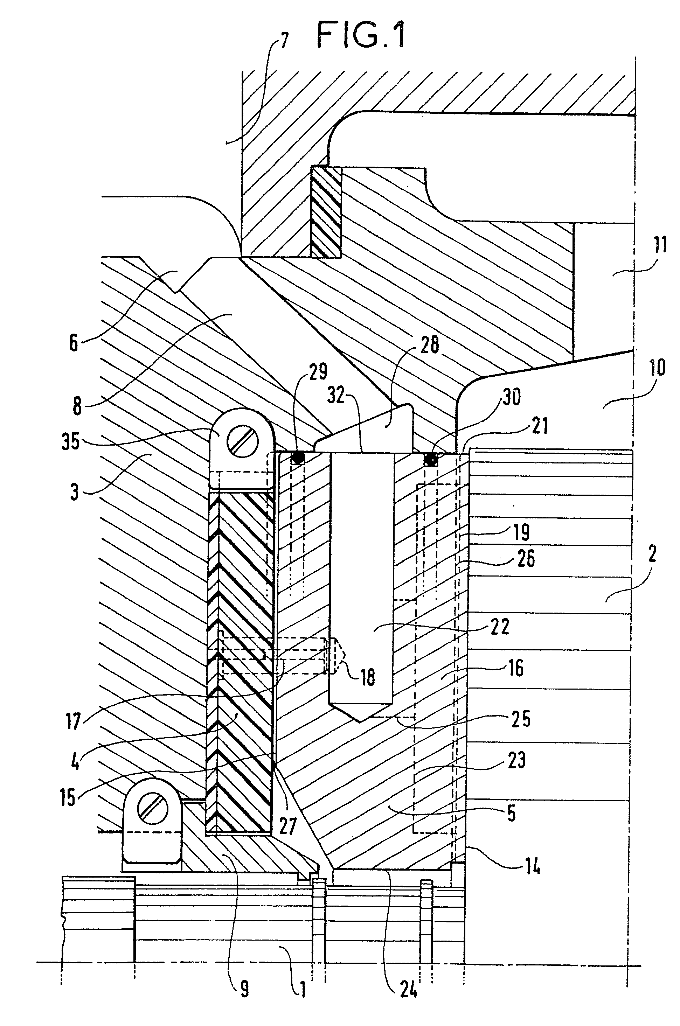

Sur la figure 1, on a représenté une coupe selon l'axe du palier de butée selon l'invention. L'arbre 1 de la turbine comporte un collet 2. Le stator de la turbine comporte une cage à butée 3 disposée autour du collet 2 et qui contient un anneau élastique 4 tapissant le fond de la cage à butée opposé au collet 2 et une couronne 16 comportant plusieurs patins 5 en forme de secteur séparés par des rainures 26 radiales creusées dans ladite couronne 16 et s'étendant sur la totalité de la largeur de la couronne 16.

Dans le stator est prévu une chambre annulaire d'alimentation en huile 6 dans laquelle débouche un conduit d'amenée d'huile 7. Des conduits 8 relient la chambre 6 à l'intérieur de la cage à butée 3.

Une garniture d'étanchéité 9 est prévue entre l'arbre 1 et la cage à butée 3 de façon que l'huile ne s'enfuit pas le long de l'arbre 1 et limitant ainsi le cisaillement de l'huile entre l'arbre 1 et la cage à butée 3.

Autour du collet 2 dans sa partie périphérique est prévu un espace annulaire 10 servant à récupérer l'huile et cette huile est évacuée par gravitation au travers d'un ou plusieurs conduits 11 situés dans la partie inférieure de la cage 3.

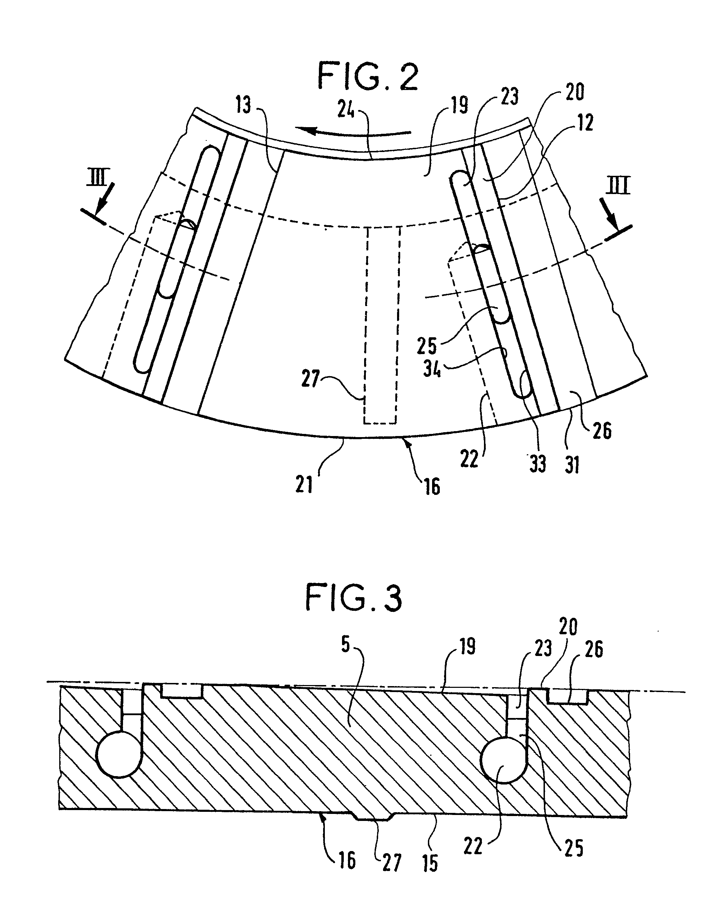

Chaque patin 5 comporte (voir figure 2) un premier bord latéral 12 et un second bord latéral 13 situé après le premier bord latéral 12 dans le sens de rotation de l'arbre 1 et du collet 2, les rainures 26 étant limitées par le second bord latéral 13 d'un patin 5 et par le premier bord latéral 12 du patin 5 suivant. Sur la tranche externe 21 de chaque patin 5 débouche une cavité 22 forée radialement.

Cette cavité 22 sert à alimenter en huile une rainure 23 usinée dans la face aval 14 et s'étendant selon un rayon d'un point voisin de la tranche externe 21 du patin jusqu'à un point voisin de la tranche interne 24 du patin 5, près du premier bord latéral 12 dudit patin.

La rainure 23 est limitée par un premier bord intérieur 33 et un second bord intérieur 34 situé après le premier bord intérieur 33 dans le sens de rotation de l'arbre 1 et du collet 2.

Entre la cavité 22 et la rainure 23 est percée une communication large 25 débouchant dans la rainure 23.

La face avant 14 de chaque patin 5 est située vis-à-vis du collet 2 et comporte une première face plane 20 parallèle à la face arrière 15 de la couronne 16, et allant du premier bord latéral 12 jusqu'au bord intérieur 3.

La seconde face plane 19 s'écarte de la face arrière 15 de la couronne 16 à partir du premier bord intérieur 33 jusqu'au second bord latéral 13.

La face arrière 15 de la couronne 16 repose sur l'anneau élastique 4 par l'intermédiaire de légères excroissances 27 dont elle est munie.

Sur l'anneau 4 sont fixés des pivots 17 pénétrant chacun dans une cavité cylindrique 18 forée parallèlement à l'axe turbomachine dans la face arrière 15 de la couronne 16 au niveau de chaque patin 5 évitant la rotation de la couronne 16 par rapport à l'anneau élastique 4 lui-même bloqué en rotation par rapport à la cage à butée 3 par l'arrêt 35. Ainsi, sous l'effet de la pression d'huile, la couronne 16 s'écarte du collet 2 en étant guidée par les pivots 17 restant dans leurs cavités respectives 18.

La tranche externe 21 des patins 5 vient contre la paroi interne de la cage 3.

Chaque conduit 8 se termine par un espace 28 creusé dans la cage 3 vis-à-vis de l'orifice 32 de chaque cavité 22. Un premier joint filiforme 29 faisant la tour de la couronne afin de constituer un tore au voisinage de sa face arrière 15 assure l'étanchéité entre la tranche externe 21 des patins 5 et la paroi de la cage 3 pour empêcher l'huile de fuir des espaces 28 vers la face arrière 15. Un second joint filiforme 30 faisant le tour de la couronne 16 au voisinage du fond 31 des rainures 26 assure l'étanchéité entre la tranche externe 21 des patins 5 et la paroi de la cage 3 pour empêcher l'huile de fuir des espaces 28 vers les rainures 26.

Lorsque les patins 5 sont alimentés en huile froide, celle-ci gicle par les rainures 23 face au collet 2.

L'huile par centrifugation se rassemble dans l'espace annulaire 10 d'où elle est évacuée par gravitation au travers d'un ou plusieurs conduits 11 situés dans la partie inférieure de la cage 3.

Grâce à l'invention, l'huile froide est amenée directement sous les patins 5 sans la faire cisailler auparavant de façon importante entre deux surfaces animées d'un mouvement relatif, en particulier au voisinage du rotor.

La majeure partie de la puissance consommée par l'huile est ainsi utilisée pour assurer la portance hydro-dynamique.

Bien entendu le collet 2 peut comporter, sur sa face opposée à celle représentée, un palier de butée symétrique de celui représenté par rapport à un plan perpendiculaire à l'axe, le même espace annulaire 10 peut servir à recueillir l'huile évacuée des deux paliers.

On pourrait remplacer la rainure unique 23 par une série d'ouvertures circulaires disposées selon une ligne située au voisinage du premier bord latéral 12.

## Revendications

1. Butée à patins fixes pour turbomachine comportant un collet (2) solidaire du rotor (1) de la turbomachine
— une couronne en deux parties égales (16) de patins fixes (5) en forme de secteurs séparés par des rainures radiales disposées en différents endroits autour du rotor (1) et dont la face arrière (15) repose en différents endroits sur des moyens de support (4), chaque patin (5) étant limité par un premier bord latéral (12), et un second bord latéral (13), le premier bord (12) étant situé avant le second bord (13) en suivant le sens de rotation du collet (2), la face avant (14) de chaque patin (5) étant située en regard du collet (2) et présentant une face plane (19) allant en s'écartant de la face arrière (15) de la couronne (16) à partir du bord intérieur latéral (33), la tranche externe (21) du patin (5) étant située en regard de la paroi d'une cage fixe (3) contenant la couronne (16) et les moyens de support (4)
— des moyens d'alimentation (6, 7, 8) en huile débouchant dans la cage fixe (3) et une chambre annulaire de récupération d'huile (10) d'où elle est évacuée par gravitation au travers d'un ou plusieurs conduits (11) situés dans la partie inférieure de la cage fixe (3), caractérisée en ce que chaque patin (5) est muni sur sa face avant (14) d'une ouverture (23) située au voisinage du premier bord latéral (12) et ne débouchant sur les tranches interne (24) et externe (21) du patin (5), ladite ouverture (23) étant alimentée par une canalisation percée (22, 25) dans la patin (5) et débouchant par un orifice (32) sur sa tranche externe (21), en ce que les rainures radiales (26) s'étendent sur la totalité de la couronne (16) en ce que la paroi de la cage face à l'orifice (32) sur la tranche externe (21) de chaque patin (5) présente un espace (28) alimenté en huile par les moyens d'alimentation (6, 7, 8) et en ce que les moyens de support (4) sont déformables.

2. Butée à patins fixes selon la revendication 1, caractérisée en ce qu'elle comporte des moyens (29, 30) assurant l'étanchéité entre la tranche externe (21) des patins (5) et la paroi de la cage (3) empêchant l'huile arrivant par les espaces (28) de fuir vers la face arrière (15) de la couronne (16) et vers les rainures (26) et les faces avant (14) des patins (5).

3. Butée à patins fixes selon la revendication 2, caractérisée en ce que les moyens d'étanchéité (29, 30) sont constitués par deux joints filiformes entourant la couronne (16) de part et d'autre des orifices (32).

**Claims**

1. A fixed pad thrust bearing for a turbomachine comprising a collar (2) integral with the rotor (1) of the turbomachine,
— a crown consisting of two identical parts (16) of fixed sector-shaped pads (5) separated by radial grooves which are disposed at various points around the rotor (1), and the rear surface (15) of which bears at various points on support means (4), each pad (5) being limited by a first lateral edge (12), and a second lateral edge (13), the first edge (12) being located in advance of the second lateral edge (13) in the direction of rotation of the collar (2), the front surface (14) of each pad (5) facing the collar (2) and having a plane surface (19) which diverges from the rear surface (15) of the crown (16) in the direction away from the inner lateral edge (33), the outer cut surface (21) of the pad (5) facing the wall of a fixed cage (3) surrounding the crown (16) and the support means (4),
— oil feed means (6, 7, 8) discharging into the fixed cage (3), and an annular oil recovery chamber (10) whence oil is evacuated by gravity through one or more ducts (11) in the lower part of the fixed cage (3), characterized in that each pad (5) has in its front surface (14) an opening (23) located close to the first lateral edge (12) and not extending as far as the inner and outer cut surfaces (24, 21) of the pad (5), said opening (23) being fed by a channel (22, 25) cut into the pad (5) and discharging through an orifice (32) to its outer cut surface (21), that the radical grooves (26) extend over the entire crown (16), that the wall of the cage in front of the orifice (23) on the outer cut surface (21) of each pad (5) has a space (28) which is supplied with oil by the feed means (6, 7, 8), and that the support means (4) are deformable.

2. A fixed pad thrust bearing according to claim 1, characterized in that it comprises sealing means (29, 30) between the outer cut surface (21) of the pad (5) and the wall of the cage (3) preventing oil reaching the spaces (28) from leaking towards the rear surface (15) of the crown (16) and towards the grooves (26) and the front surfaces (14) of the pads (5).

3. A fixed pad thrust bearing according to claim 2, characterized in that the sealing means (29, 30) are constituted by two thread-like seals surrounding the crown (16), one on each side of said orifices (32).

**Patentansprüche**

1. Axiallager mit feststehenden Gleitblöcken für eine Turbomaschine, mit einem Kragen (2), der Bestandteil des Rotors (1) der Maschine ist,
— mit einer aus zwei gleichen Teilen (16) bestehenden Krone von feststehenden Gleitblöcken (5) in Form von Sektoren, die durch radiale Rillen an verschiedenen Stellen um den Rotor (1) herum voneinander getrennt sind und deren Rückseite (15) an verschiedenen Stellen auf Tragemitteln (4) aufliegen, wobei jeder Gleitblock (5) durch einen ersten Seitenrand (12) und einen zweiten Seitenrand (13) begrenzt ist und der erste Rand (12) in Drehrichtung des Kragens (2) gesehen vor dem zweiten Rand (13) liegt, während die Vorderseite (14) jedes Gleitblocks (5) gegenüber dem Kragen (2) liegt und eine ebene Fläche (19) bildet, die sich, vom inneren Seitenrand (33) ausgehend, von der Rückseite (15) der Krone (16) entfernt, wobei die äußere Schnittfläche (21) des Gleitblocks (5) gegenüber der Wand eines ortsfesten Käfigs (3) liegt, der die Krone (16) und die Tragemittel (4) umschließt,
— mit Ölspeisemitteln (6, 7, 8), die in den ortsfesten Käfig (3) münden, und mit einer ringförmigen Ölauffangkammer (10), von der das Öl mittels Schwerkraft durch eine oder mehrere Leitungen (11), die im unteren Teil des ortsfesten Käfigs (3) verlaufen, abfließt, dadurch gekennzeichnet, daß jeder Gleitblock (5) auf seiner Vorderseite (14) mit einer Öffnung (23) versehen ist, die in der Nähe des ersten Seitenrands (12) liegt und nicht bis in die innere und äußere Schnittfläche (24, 21) des Gleitblocks (5) reicht, wobei diese Öffnung (23) über eine in den Gleitblock (5) eingeschnittene Kanalisation (22, 25) versorgt wird und über eine Öffnung (32) in die äußere Schnittfläche (21) mündet, daß die radialen Rillen (26) sich über die ganze Krone (26) erstrecken, daß die Wand des Käfigs gegenüber der Öffnung (23) in der äußeren Schnittfläche (21) jedes Gleitblocks (5) einen Raum (28) aufweist, der von den Ölspeisemitteln (6, 7, 8) mit Öl versorgt wird, und daß die Tragmittel (4) verformbar sind.

2. Axiallager mit feststehenden Gleitblöcken nach Anspruch 1, dadurch gekennzeichnet, daß es Mittel (29, 30) aufweist, die die Dichtheit zwischen der äußeren Schnittfläche (21) der Gleitblöcke (5) und der Wand des Käfigs (3) sicherstellen und das Öl, das durch die Räume (28) ankommt, daran hindert, zur Rückseite (15) der Krone (16) und zu den Rillen (26) und den Vorderseiten (14) der Gleitblöcke (5) zu entweichen.

3. Axiallager mit feststehenden Gleitblöcken nach Anspruch 2, dadurch gekennzeichnet, daß die Dichtmittel (29, 30) aus zwei fadenförmigen Dichtungen bestehen, die die Krone (16) zu beiden Seiten der Öffnungen (32) umgeben.

# FIG.1

# FIG. 2

# FIG. 3